# EUROPEAN PATENT APPLICATION

(11) **EP 4 693 723 A1**
(43) Date of publication of application: **11.02.2026**
(21) Application number: 24927591.8
(22) Date of filing: 12.12.2024
(51) Int. Cl.: H01M 50/691

(54) **BATTERY PACK CASE, AND BATTERY PACK AND VEHICLE COMPRISING SAME**

(30) Priority: 10.06.2024 KR 20240075262
(71) Applicant: LG ENERGY SOLUTION, LTD., Seoul 07335 (KR)
(72) Inventor: JUNG, Ki Taek, Daejeon 34122 (KR); KANG, Jae Hyuk, Daejeon 34122 (KR); PARK, Sang Jun, Daejeon 34122 (KR)
(74) Representative: BCKIP Part mbB
(86) International application number: PCT/KR2024/020286
(87) International publication number: WO 2025/258765

(57) **Abstract**

Disclosed are a battery pack case including a base plate forming one side of the battery pack case and having a through hole formed to connect an internal space of the battery pack case with the outside, and an outer plate disposed to be spaced apart from an outer surface of the base plate and provided to block the through hole from being exposed to the outside and form a separation space between the base plate and the outer plate, a battery pack including the same, and a vehicle.

## Description

### [TECHNICAL FIELD]

The present disclosure relates to a battery pack case capable of effectively discharging a cooling medium when the cooling medium leaks when a cooling mechanism is installed inside the battery pack case to prevent a short circuit in battery cells, a battery pack including the same, and a vehicle.

### [BACKGROUND ART]

Recently, technologies for reducing carbon are being actively developed to solve environmental problems such as abnormal temperatures. In order to reduce carbon, it is necessary to produce energy in an eco-friendly manner rather than producing energy using fossil fuels, store the produced energy in the form of electric energy, and use the stored electric energy in vehicles, various industrial sites, and homes.

In order to utilize electric energy for reducing carbon, the use of a battery that can store and extract electric energy is essential. Therefore, in order to sufficiently store electric energy and use the same without inconvenience, it is necessary to secure the performance of the battery.

Batteries mainly utilize the oxidation-reduction reaction of metal ions, high-density metal ions are used to increase the capacity, charge/discharge performance, and efficiency of a battery, and much research is being conducted on materials constituting electrolytes and solid electrolytes. However, as battery performance improves, there is a problem of decreased stability in general.

Batteries used in vehicles, industries, and homes are manufactured as physical units called packs. A battery pack performs functions of preventing fire from spreading to the outside in the event of an accident such as battery thermal runaway by embedding multiple battery cells inside a battery case and sealing the same, and protecting the internal battery cells from deterioration due to the influence of the external environment or damage due to physical factors.

Multiple battery cells are embedded in a battery pack in an intermediate form of a module or an assembly (cell module assembly (CMA)). In the case of a battery module or assembly, multiple battery cells are assembled into a single module or assembly, and multiple modules are fastened inside a pack case, thereby completing a battery pack. When servicing a battery, maintenance is made easy by allowing maintenance to be performed in units of such modules or assemblies.

Each of multiple unit battery cells constituting a module or assembly is composed of a positive electrode, a negative electrode, and an electrolyte. Since battery cells generate heat during charging and discharging, effective heat dissipation for the battery cells is required. In addition, from the perspective of battery modules, assemblies, and battery packs, design for efficient heat dissipation is necessary to prevent safety accidents.

Meanwhile, batteries may deteriorate due to manufacturing errors, excessive charging and discharging, and aging. If battery deterioration continues, it can eventually cause a fire. Therefore, it is necessary to prepare in advance to prevent a fire from occurring in batteries. To this end, it is important to continuously sense the status of a battery, recognize and respond to a problem when the problem has occurred, and it is necessary to minimize damage when an unexpected problem occurs.

In particular, when a cooling mechanism for cooling battery cells is installed inside a battery pack case, a cooling hose and the like are built into the battery pack case. When a fire occurs in such a system, the cooling hose may be damaged by heat and a cooling medium may leak inside the battery pack case.

The leaked cooling medium may be a conductive fluid, and thus there is a possibility of a short circuit occurring in a battery cell or terminal. Therefore, when a cooling mechanism is installed inside the battery pack case, a technique for effectively and rapidly discharging the cooling medium to the outside to prevent a short circuit in such an accident is required.

The matters described as background technology above are only intended to enhance understanding of the background of the present disclosure and should not be taken as an acknowledgment that they correspond to prior art already known to those skilled in the art.

### [DETAILED DESCRIPTION OF INVENTION]

### [TECHNICAL PROBLEMS]

An object of the present disclosure proposed to solve such problems is to provide a battery pack case capable of effectively discharging a cooling medium leaking when a cooling mechanism is installed inside the battery pack case to prevent a short circuit in battery cells, a battery pack including the same, and a vehicle.

The technical objects to be achieved in the present disclosure are not limited to the technical objects mentioned above, and other technical objects not mentioned will be clearly understood by those skilled in the art to which the present disclosure belongs from the description below.

### [TECHNICAL SOLUTION]

A battery pack case according to the present disclosure to achieve the aforementioned object includes a base plate forming one side of the battery pack case and having a through hole formed to connect an internal space of the battery pack case with the outside, and an outer plate disposed to be spaced apart from an outer surface of the base plate and provided to block the through hole from being exposed to the outside and form a separation space between the base plate and the outer plate.

The base plate may form a bottom surface of the battery pack case, and a battery assembly may be mounted on the upper surface of the base plate.

The through hole of the base plate may be formed at a point between a plurality of battery assemblies built into the battery pack case.

The through hole of the base plate may be formed at a position corresponding to a cooling mechanism built into the battery pack case.

The cooling mechanism may include at least one of a cooling hose or a cooling port.

A cooling channel may be provided between the battery assemblies built into the battery pack case and the base plate, and the through hole of the base plate may be formed at a position corresponding to at least one of the cooling port of the cooling channel or the cooling hose connected to the cooling port.

The cooling channel may be connected to one side of the battery assembly, the cooling port may be formed to protrude from the cooling channel to the outside of the battery assembly, the cooling hose may be connected to the cooling port, and the through hole of the base plate may be formed at a point corresponding to the cooling port.

The through hole of the base plate may be formed below the cooling port of the cooling mechanism built into the battery pack case or the cooling hose connected to the cooling port such that a cooling medium leaking from the cooling port or the cooling hose flows into the through hole due to the weight of the cooling medium.

The base plate may be thicker than the outer plate.

The base plate may be made of aluminum.

The outer plate may be made of steel.

A filtering mechanism may be installed in the through hole of the base plate to block foreign substances from entering the separation space.

A flange may be formed on an inner surface of the through hole to protrude toward the inside of the through hole, and the filtering mechanism may be coupled to the flange.

A plurality of support parts may be formed on the flange to protrude toward the filtering mechanism, and the filtering mechanism may be separated from the flange by being mounted on the support parts.

The filtering mechanism may be installed on the flange by being fixed to the support parts.

The filtering mechanism may have a plate shape and may be mounted on the inside of the through hole, an outer surface of the filtering mechanism may be separated from the inner surface of the through hole, and the internal space of the battery pack case and the separation space may communicate with each other through the separated gap.

The filtering mechanism may have a plate shape and may be mounted on the inside of the through hole, and the upper surface of the filtering mechanism and the base plate may form the same plane.

A side wall may be formed on the outer plate along the perimeter of the outer plate, and the outer plate may be coupled with the base plate through the side wall to form the separation space.

The outer plate may be formed such that a point corresponding to the through hole of the base plate protrudes toward the through hole.

The outer plate may be formed to incline outwardly from a point corresponding to the through hole such that a height of the separation space increases with increasing distance from the point corresponding to the through hole.

A sealing part may be provided on the outer plate along the perimeter of the outer plate, and the outer plate may be coupled with the base plate with the sealing part in between.

### [EFFECT OF INVENTION]

According to the battery pack case, the battery pack including the same, and the vehicle of the present disclosure, a cooling medium leaking when a cooling mechanism is installed inside the battery pack case can be effectively discharged, thereby preventing a short circuit in battery cells.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is a cross-sectional view of a battery pack case according to an embodiment of the present disclosure.
FIG. 2 is a top view of the battery pack case illustrated in FIG. 1.
FIG. 3 is a diagram showing a through hole of the battery pack case illustrated in FIG. 1.
FIG. 4 is a diagram showing a state in which a filtering mechanism is mounted in the battery pack case illustrated in FIG. 3.
FIG. 5 is a cross-sectional view of the battery pack case illustrated in FIG. 1 at a through hole point.
FIG. 6 is a bottom view of the battery pack case illustrated in FIG. 1.
FIG. 7 is a cross-sectional view showing an outer plate of the battery pack case illustrated in FIG. 1.
FIG. 8 is a diagram showing a battery pack and a vehicle to which the battery pack case illustrated in FIG. 1 is applied.

### [BEST MODE FOR CARRYING OUT THE INVENTION]

In the following description, a detailed description of known functions and configurations incorporated herein will be omitted when it may obscure the subject matter of the present disclosure. The same reference numbers will be used in the drawings to refer to the same or like parts. In addition, the attached drawings are only intended to facilitate easy understanding of the embodiments disclosed in this specification, and the technical ideas disclosed in this specification are not limited by the attached drawings, and should be understood to include all modifications, equivalents, or substitutes included in the spirit and technical scope of the present disclosure.

Although terms such as, for example, "first" and "second" may be used to describe various elements, these terms are merely used to distinguish the same or similar elements from each other. The aforementioned terms are used solely to distinguish one component from another.

An element described in the singular form is intended to include a plurality of elements unless the context clearly indicates otherwise. In the present specification, the term "comprise" or "include" is intended to specify the presence of a described feature, number, step, operation, component, part, or a combination thereof, but should be understood as not excluding in advance the possibility of the presence or addition of one or more other features, numbers, steps, operations, components, parts, or combinations thereof.

The suffixes "module" and "unit" of elements used in the following description are used for convenience of description and thus can be used interchangeably and do not have any distinguishable meanings or functions. When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

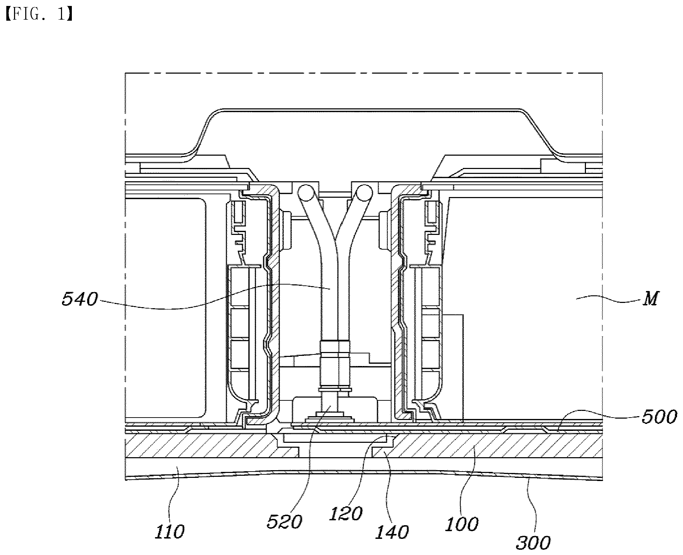

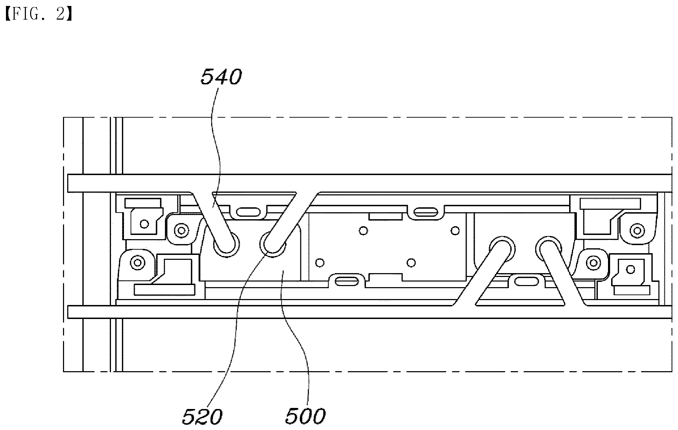

Hereinafter, embodiments disclosed in this specification will be described in detail with reference to the attached drawings. Regardless of the drawing symbols, identical or similar components will be given the same reference numerals and redundant descriptions thereof will be omitted. A battery pack case of the present disclosure will be described with reference to FIGS. 1 and 2. The battery pack case C according to the present disclosure includes a base plate 100 that forms one side of the battery pack case C and has a through hole 120 formed therein that connects the internal space of the battery pack case C with the outside, and an outer plate 300 that is spaced apart from the outer surface of the base plate 100, blocks the through hole 120 from being exposed to the outside, and forms a separation space 110 between the outer plate 300 and the base plate 100.

A plurality of battery assemblies M is built into the battery pack case C. The battery assemblies M mentioned in the present disclosure mean configuring a plurality of battery cells as a single unit assembly. The battery assemblies M include both a battery module that forms a battery assembly including a plurality of battery cells through a single case and a battery assembly configured in a semi-assembled state. Further, a cell-to-pack (CTP) type battery assembly that assembles battery cells and directly fastens the same to the inside of a battery pack case C is also included in the battery assemblies M. That is, the battery assembly M of the present disclosure assembles battery cells and mounts the same inside the battery pack case C and includes various types of unit assemblies.

Battery cells mounted inside the battery pack case C require cooling. Since battery cells generate heat during charging and discharging, cooling has a significant impact on the performance and durability of the battery cells. In an embodiment of the present disclosure, a method in which a cooling mechanism 500, 520 and 540 is mounted inside the battery pack case C and the battery cells are directly cooled through the cooling mechanism is proposed.

As an example of the cooling mechanism 500, 520, and 540, a cooling channel 500 may be installed below the battery assembly M as illustrated. A cooling medium circulates inside the cooling channel 500 and directly cools the battery assembly M through heat conduction. When this direct heat conduction type cooling channel 500 is used, cooling efficiency increases.

However, in order to use the cooling channel 500, a cooling hose 540 needs to be installed inside the battery pack case C. The cooling hose 540 is provided for inflow and outflow of the cooling medium, and by distributing the cooling medium through the cooling hose 540, the cooling medium of the cooling channel 500 circulates and cools the battery cells.

The cooling hose 540 is connected to the cooling channel 500 through a cooling port 520. The present disclosure can be applied to cases in which the cooling mechanism is configured using various components in addition to the cooling channel 500, the cooling hose 540, and the cooling port 520.

Sealing may become weak if connection between the cooling channel 500, the cooling hose 540, and the cooling port 520 is incomplete or depending on the period of use. In addition, if a fire occurs inside the battery pack case C, the durability may decrease and the cooling medium thereinside may leak due to melting.

If the cooling medium leaks inside the battery pack case C, electrical insulation of the battery cells and terminals may be destroyed and problems may occur due to short circuits or the like. Therefore, when the cooling mechanism is directly installed inside the battery pack case C, it is important to prevent the cooling medium from leaking, but it is also very important to rapidly discharge the leaked cooling medium to the outside.

To this end, in the present disclosure, a through hole 120 is formed in the base plate 100. The base plate 100 forms one side of the battery pack case C, and the through hole 120 is formed to connect the internal space of the battery pack case C with the outside. In the illustrated embodiment, the base plate 100 forms the bottom surface of the battery pack case C. However, the base plate 100 does not necessarily have to be the bottom surface and may be a surface of the battery pack case C in various directions on which the battery assembly M is installed.

The base plate 100 forms the bottom surface of the battery pack case C, and the battery assembly M may be mounted on the upper surface of the base plate 100. The cooling channel 500 is provided between the battery assembly M built into the battery pack case C and the base plate 100 such that the battery assembly M is directly cooled through the cooling channel 500. The cooling mechanism includes the cooling channel 500 and the cooling port 520 provided in the cooling channel 500. In addition, the cooling mechanism includes the cooling hose 540 connected to the cooling port 520.

The through hole 120 is formed in the base plate 100, and the cooling medium leaking from the cooling mechanism is discharged to the outside of the battery pack case C through the through hole 120 of the base plate 100. Since the through hole 120 is formed in the base plate 100, which is the bottom surface of the battery pack case C, the leaked cooling medium flows into the through hole 120 by its own weight and is naturally discharged to the outside through the through hole 120.

In particular, the through hole 120 may be formed at a position corresponding to at least one of the cooling port 520 of the cooling channel 500 or the cooling hose 540 connected to the cooling port 520. That is, as illustrated in FIG. 2, the through hole 120 of the base plate 100 may be formed at a point between a plurality of battery assemblies M built into the battery pack case C. In addition, the through hole 120 of the base plate 100 may be formed at a position corresponding to the cooling mechanism built into the battery pack case C.

The cooling channel 500 is positioned below the battery assembly M. The cooling port 520 is formed at a point exposed laterally on the battery assemblies M to supply the cooling medium to the cooling channel 500. Accordingly, the cooling port 520 can be effectively connected to the cooling hose 540 without interfering with the battery assemblies M.

Since the cooling medium may easily leak in the cooling hose 540 or the cooling port 520 when a fire occurs, it is preferable that the through hole 120 be formed at a point corresponding to the lower side of the cooling hose 540 and the cooling port 520. In this manner, if a fire occurs inside the battery pack case C or a leak occurs at the point where the cooling hose 540 and the cooling port 520 are connected, the cooling medium will leak downward due to its own weight and be discharged directly to the outside through the through hole 120. Therefore, the possibility of the leaked cooling medium coming into contact with battery cells or terminals is significantly reduced.

Specifically, as illustrated in FIGS. 1 and 2, the cooling channel 500 may be coupled to one side of the battery assembly M, the cooling port 520 may be formed to protrude from the cooling channel 500 to the outside of the battery assembly M, the cooling hose 540 may be connected to the cooling port 520, and the through hole 120 of the base plate 100 may be formed at a point corresponding to the cooling port 520. In addition, the through hole (120) of the base plate 100 is formed below the cooling port 520 of the cooling mechanism built into the battery pack case C or the cooling hose 540 connected to the cooling port 520, and thus the cooling medium leaking from the cooling port 520 or the cooling hose 540 can flow into the through hole 120 by its own weight.

The outer plate 300 is disposed to be spaced apart from the outer surface of the base plate 100, blocks the through hole 120 from being exposed to the outside, and forms a separation space 110 between the outer plate 300 and the base plate 100. The through hole 120 needs to be blocked from being connected to the outside to prevent external foreign substances from flowing into the battery pack case C. In addition, in order to prevent other foreign substances or flames from flowing out to the outside while the leaked cooling medium is discharged to the outside through the through hole 120, the lower part of the base plate 100 needs to be shielded through the outer plate 300.

To this end, the outer plate 300 is disposed to be spaced apart from the outer surface of the base plate 100 and shields the through hole 120 from being exposed to the outside. Specifically, the outer plate 300 has a side wall formed along the perimeter thereof. The outer plate 300 may be joined to the base plate 100 through the side wall to form the separation space 110 between the outer plate 300 and the base plate 100. The separation space 110 formed between the base plate 100 and the outer plate 300 is normally an empty space and serves to absorb or disperse an impact applied from below. When the cooling medium leaks inside the battery pack case C, the leaked cooling medium is discharged through the through hole 120 and stored in the separation space 110 formed between the base plate 100 and the outer plate 300, thereby reducing the possibility of the cooling medium, foreign substances, and other flames leaking out. In addition, the cooling medium filled in the separation space 110 serves to prevent a fire in the battery pack from spreading to the outside by serving as a firewall or a fire extinguishing wall at the bottom of the battery pack case C.

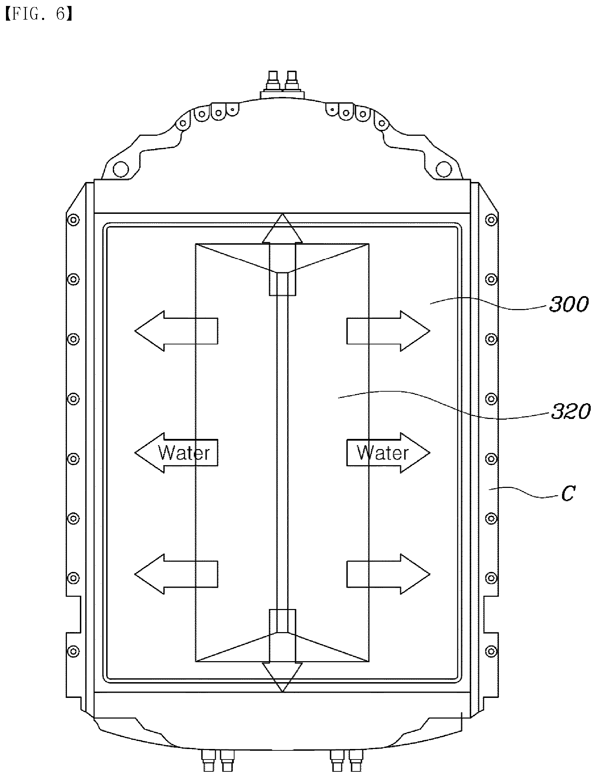

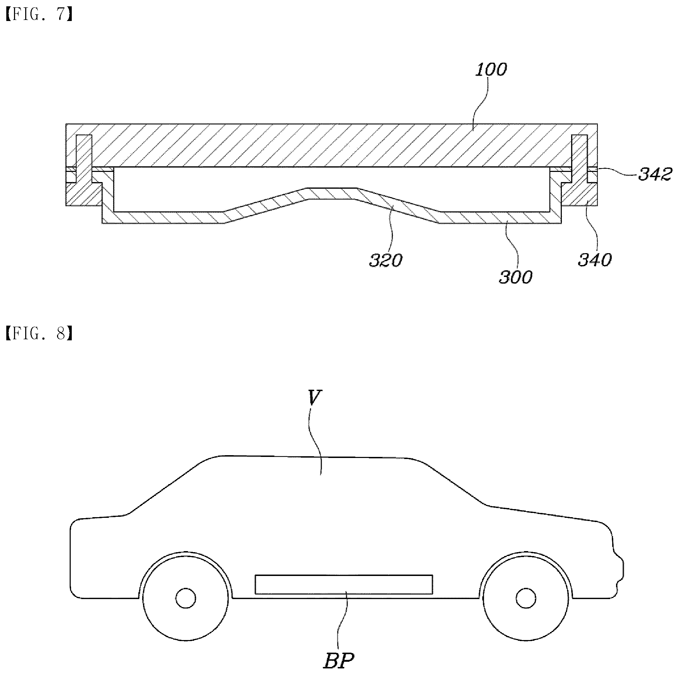

As shown in FIGS. 6 and 7, the outer plate 300 may be formed such that the point corresponding to the through hole 120 of the base plate 100 protrudes toward the through hole 120. In the illustrated embodiment, the through hole 120 is formed at the center of the battery pack case C, and the center portion of the outer plate 300 corresponding thereto also protrudes upward.

In addition, the outer plate 300 is formed to be inclined toward the outside from the point corresponding to the through hole 120 such that the height of the separation space 110 may increase toward the outside from the point corresponding to the through hole 120. That is, since the outer plate 300 has an inclined surface 320 that gradually decreases toward the side from the highest protruding central portion, the cooling medium discharged through the through hole is naturally guided to the lateral edge of the battery pack case C along the inclined surface 320.

Since vehicles are not always positioned on a flat surface, by setting the outer plate 300 at an incline in this manner, the leaked cooling medium is prevented from accumulating at the center point and discharge of the cooling medium through the though hole 120 is prevented from being delayed. The outer plate 300 is formed to be highest at the point corresponding to the through hole 120 and to be gradually inclined downward from the point as described above, the cooling medium is not delayed in the through hole 120 but is rapidly transferred to the entire area of the separation space 110. In addition, since the outer plate 300 is formed with an incline, it has a structure that is more robust against external impact from below. That is, even if an impact is applied from the outside, the impact can be absorbed through the bent shape of the outer plate 300.

In particular, when a fire occurs in the battery pack, the internal pressure inside the battery pack case C significantly increases due to generation of a large amount of gas. In this case, the separation space 110 between the base plate 100 and the outer plate 300 also forms a high-pressure environment through the through hole 120. In this case, pressure expanding outward is applied to the outer plate 300. However, the outer plate 300 is inclined as illustrated and has a shape that protrudes toward the through hole 120, and thus serves as a spring that can respond to high internal pressure.

In addition, the outer plate 300 is provided with a sealing part 342 formed along the perimeter thereof and is connected to the base plate 100 through bolting 340 with the sealing part 342 interposed therebetween, thereby preventing external propagation of the cooling medium or flame, preventing inflow of foreign substances into the battery pack case C during normal times, and isolating the internal atmosphere of the battery pack case C from the outside, thereby providing an advantageous aspect in heat management.

The base plate 100 may be thicker than the outer plate 300. For example, the base plate 100 may be made of aluminum. The outer plate 300 may be made of steel. The base plate 100 is formed of aluminum to secure formability and improve weldability with other panels or parts in the vicinity. Instead, since the base plate 100 is made of aluminum, it is preferable to form the base plate 100 thicker than the outer plate 300.

On the other hand, the outer plate 300 may be made of a high-strength steel material to secure the formability of the central portion toward the through hole 120. In addition, it is possible to form the outer plate 300 thinner than the base plate 100. In addition, it is preferable to use stainless steel among steel materials to prevent corrosion. By forming respective panels with different thicknesses using different materials in this manner, the weight can be optimized and the strength, safety, and durability can be improved.

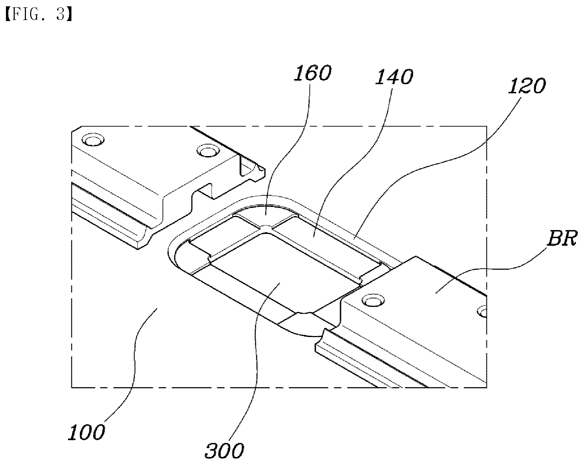

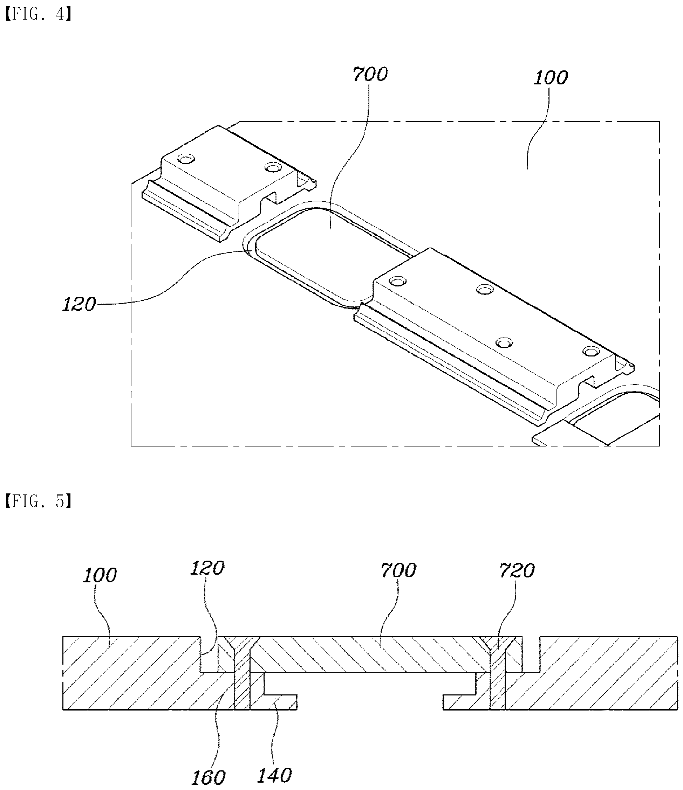

As shown in FIGS. 3 to 5, a filtering mechanism 700 is installed in the through hole 120 of the base plate 100 to block foreign substances from flowing into the separation space. Specifically, a flange 140 is formed on the inner surface of the through hole 120 to protrude toward the inside of the through hole 120, and the filtering mechanism 700 may be coupled to the flange 140. In addition, a plurality of support parts 160 is formed on the flange 140 to protrude toward the filtering mechanism 700, and the filtering mechanism 700 is mounted on the support parts 160, and thus the filtering mechanism 700 can be separated from the flange 140.

According to this structure, the internally leaked cooling medium is discharged smoothly through the space between the filtering mechanism 700 and the flange 140, while foreign substances other than the cooling medium are blocked from being discharged by being caught by the filtering mechanism 700. By blocking the discharge of foreign substances, the possibility of flame propagation to the outside can be reduced. In addition, the sizes of foreign substances to be filtered may be determined by adjusting the distance between the filtering mechanism 700 and the flange 140.

The filtering mechanism 700 may be installed on the flange 140 by being fixed to the support parts 160. In addition, the filtering mechanism 700 is in the shape of a plate and is installed inside the through hole 120, the outer surface of the filtering mechanism 700 is separated from the inner surface of the through hole 120, and the internal space of the battery pack case C can communicate with the separation space 110 through this separated gap.

In addition, the filtering mechanism 700 in a plate shape is installed inside the through hole 120, and the upper surface of the filtering mechanism 700 and the base plate 100 can form the same plane. Although the filtering mechanism 700 may have various embodiments, in the simplest form, it can have a plate shape having a certain thickness as illustrated. By forming the filtering mechanism 700 as a plate rather than a mesh, it is possible to prevent damage to the filtering mechanism 700 due to flame. In addition, only the cooling medium can pass through the gap between the filtering mechanism 700, and the flange 140 and the support parts 160.

In addition, since the upper surface of the filtering mechanism 700 and the upper surface of the base plate 100 form the same plane, damage and interference of the filtering mechanism 700 caused by other components are prevented. Specifically, the filtering mechanism 700 is supported by the support parts 160 of the flange 140 as illustrated, and may be fastened to the support parts 160 through bolting 720.

FIG. 8 shows a battery pack BP to which the battery pack case of the present disclosure is applied and a state in which such a battery pack is mounted on a vehicle V. The battery pack of the present disclosure can be applied to various industries in addition to vehicles, and an example thereof may be an electric energy storage system (ESS). According to the battery pack case, the battery pack including the same, and the vehicle of the present disclosure, when a cooling mechanism is installed inside the battery pack case, a leaked cooling medium can be effectively discharged when the cooling medium leaks, thereby preventing short circuits in battery cells.

Although the present disclosure has been described above with reference to preferred embodiments, it will be understood by those skilled in the art that various modifications and changes may be made to the present disclosure without departing from the idea and scope of the present disclosure as set forth in the following claims.

## Claims

1. A battery pack case comprising:
a base plate forming one side of the battery pack case and having a through hole formed to connect an internal space of the battery pack case with the outside; and
an outer plate disposed to be spaced apart from an outer surface of the base plate and provided to block the through hole from being exposed to the outside and form a separation space between the base plate and the outer plate.

2. The battery pack case of claim 1, wherein the base plate forms a bottom surface of the battery pack case, a battery assembly is mounted on the upper surface of the base plate, and the through hole of the base plate is formed at a point between a plurality of battery assemblies built into the battery pack case.

3. The battery pack case of claim 1, wherein the through hole of the base plate is formed at a position corresponding to a cooling mechanism built into the battery pack case,
wherein the cooling mechanism includes at least one of a cooling hose or a cooling port.

4. The battery pack case of claim 1, wherein a cooling channel is provided between the battery assemblies built into the battery pack case and the base plate, and the through hole of the base plate is formed at a position corresponding to at least one of the cooling port of the cooling channel or the cooling hose connected to the cooling port.

5. The battery pack case of claim 4, wherein the cooling channel is connected to one side of the battery assembly, the cooling port is formed to protrude from the cooling channel to the outside of the battery assembly, the cooling hose is connected to the cooling port, and the through hole of the base plate is formed at a point corresponding to the cooling port.

6. The battery pack case of claim 1, wherein the through hole of the base plate is formed below the cooling port of the cooling mechanism built into the battery pack case or the cooling hose connected to the cooling port such that a cooling medium leaking from the cooling port or the cooling hose flows into the through hole due to the weight of the cooling medium.

7. The battery pack case of claim 1, wherein the base plate has a thickness thicker than the outer plate, the base plate is made of aluminum, and the outer plate is made of steel.

8. The battery pack case of claim 1, wherein a filtering mechanism is installed in the through hole of the base plate to block foreign substances from entering the separation space, a flange is formed on an inner surface of the through hole to protrude toward the inside of the through hole, and the filtering mechanism is coupled to the flange.

9. The battery pack case of claim 8, wherein a plurality of support parts is formed on the flange to protrude toward the filtering mechanism, and the filtering mechanism is separated from the flange by being mounted on the support parts or is installed on the flange by being fixed to the support parts.

10. The battery pack case of claim 8, wherein the filtering mechanism has a plate shape and is mounted on the inside of the through hole, an outer surface of the filtering mechanism is separated from the inner surface of the through hole, the internal space of the battery pack case and the separation space communicate with each other through the separated gap, and the upper surface of the filtering mechanism and the base plate form the same plane.

11. The battery pack case of claim 1, wherein a side wall is formed on the outer plate along the perimeter of the outer plate, the outer plate is coupled with the base plate through the side wall to form the separation space, and the outer plate is formed such that a point corresponding to the through hole of the base plate protrudes toward the through hole.

12. The battery pack case of claim 1, wherein the outer plate is formed to incline outwardly from a point corresponding to the through hole such that a height of the separation space increases with increasing distance from the point corresponding to the through hole.

13. The battery pack case of claim 1, wherein a sealing part is provided on the outer plate along the perimeter of the outer plate, and the outer plate is coupled with the base plate with the sealing part in between.

14. A battery pack comprising the battery pack case of claim 1.

15. A vehicle comprising the battery pack of claim 14.
